# EUROPÄISCHE PATENTANMELDUNG

(11) **EP 0 670 233 A2**
(43) Veröffentlichungstag der Anmeldung: **06.09.1995**
(21) Anmeldenummer: 94105127.8
(22) Anmeldetag: 31.03.1994
(51) Int. Cl.: B60K 13/04, F16F 3/093

(54) **Aufhängung bewegter Bauteile bei Kraftfahrzeugen**

(30) Priorität: 02.03.1994 DE 4406729
(71) Anmelder: HENNIGES ELASTOMER- UND KUNSTSTOFFTECHNIK GMBH & CO KG, D-31547 Rehburg-Loccum (DE)
(72) Erfinder: Streifling, Matthias, Dipl.-Ing. (FH), D-31535 Neustadt (DE); Vogel, Reiner, Dipl.-Ing. (FH), D-31609 Balge-Mehlbergen (DE)
(74) Vertreter: Wehser, Wulf, Dipl.-Ing.

(57) **Zusammenfassung**

Eine Aufhängung bewegter Bauteile bei Kraftfahrzeugen, wie die Motoraufhängung oder die Radaufhängung, vorzugsweise die Aufhängung von Auspuffanlagen, wobei die einzelnen Aufhängungselemente aus Gummi oder gummiähnlichem Kunststoff hergestellte Federelemente sind, die zwischen der Karosserie des Kraftfahrzeuges und den aufzuhängenden Teilen angeordnet sind, wobei die Federelemente jeweils aus zwei ineinander eingreifenden Ringen bestehen, die miteinander überwenigstens einen Steg verbunden sind, wobei der erste an die Auspuffanlage angeschlossene Ring (das erste Federelement) die durch den normalen Fahrbetrieb verursachten hochfrequenten Feinschwingungen aufnimmt, während der zweite Ring (das zweite Federelement) an die Karosserie angeschlossen ist und durch Schlaglöcher oder dergleichen verursachten niederfrequenten Schwingungen mit großer Amplitude aufnimmt, soll so ausgebildet werden, daß die durch die schwin#genden Bauteile erzeugten Geräusche weitgehend reduziert sind.

Hierzu ist erfindungsgemäß vorgesehen, daß zwei einander integrierte Federelemente ineinander eingreifen und durch wenigstens einen Steg miteinander verbunden sind, wobei sie schwingungsmäßig einander nachgeschaltet sind, so daß die Feinschwingungen sich nur auf das erste Federelement auswirken, welches eine weichere Federcharakteristik und eine geringere dynamische Steifigkeit aufweist und an die Auspuffanlage angeschlossen ist, wobei die beiden Federelemente oder Ringe so dimensioniert sind, daß die beispielsweise bei einer Fahrt über Schlaglöcher oder dergleichen in Form von Grobschwingungen sich ergebenden hohen Auslenkungen dadurch eliminiert werden, daß die hohen Auslenkungen über das erste weichere Federelement durchschlagen, bis dieses Federelement seinerseits in Kontakt mit dem zweiten Federelement kommt, wobei das weichere Federelement im Inneren des härteren, den Grobschwingungen zugeordneten Federelementes angeordnet ist, so daß bei hohen Auslenkungen das innere weichere Federelement in Kontakt mit dem äußeren härteren Federelement kommt, welches die Amplituden der Grobschwingungen begrenzt und die Nachschwingungen dämpft.

## Beschreibung

Die Erfindung betrifft eine Aufhängung bewegter Bauteile bei Kraftfahrzeugen, wie die Motoraufhängung oder die Radaufhängung, vorzugsweise die Aufhängung von Auspuffanlagen, wobei die einzelnen Aufhängungselemente aus Gummi oder gummiähnlichem Kunststoff hergestellte Federelemente sind, die zwischen der Karosserie des Kraftfahrzeuges und den aufzuhängenden Teilen angeordnet sind, wobei die Federelemente jeweils aus zwei ineinander eingreifenden Ringen bestehen, die miteinander über wenigstens einen Steg verbunden sind, wobei der erste an die Auspuffanlage angeschlossene Ring (das erste Federelement) die durch den normalen Fahrbetrieb verursachten hochfrequenten Feinschwingungen aufnimmt, während der zweite Ring (das zweite Federelement) an die Karosserie angeschlossen ist und durch Schlaglöcher oder dergleichen verursachten niederfrequenten Schwingungen mit großer Amplitude aufnimmt.

Nachteilig bei dieser bekannten Anordnung ist es, daß die Schwingungsgeräusche der Feinschwingungen nach außen wiedergegeben werden, so daß es erforderlich wurde, in Form eines Kompromisses zusätzliche Maßnahmen, nämlich insbesondere eine Verstärkung des ersten Federelementes vorzusehen, damit dieses Federelement sowohl die durch den normalen Fahrbetrieb verursachten hochfrequenten Feinschwingungen mit geringer Amplitude als auch die durch Schlaglöcher oder dergleichen verursachten niederfrequenten Grobschwingungen aufnehmen kann. Bei der bekannten Anordnung hat aber der zu schließende Kompromiß zur Folge, daß das dort verwendete eingliedrige Federelement in den beiden Bereichen, nämlich im Bereich der Feinschwingungen und im Bereich der Grobschwingungen keineswegs optimal arbeiten kann.

Zwar führt die Verwendung von Gummi oder gummiähnlichem Kunststoff für solche Federelemente zu einer teilweisen Aufnahme beider Schwingungsarten, wobei Gummi oder gummiähnlicher Kunststoff einerseits Schwingungen der aufgehängten Teile ermöglichen und andererseits gleichzeitig diese Schwingungen dämpfen soll, jedoch ist die hierdurch erzielte Wirkung durch den Wewrkstoff allein nur in Teilbereichen gegeben.

Der Erfindung liegt demgemäß die Aufgabe zugrunde, ein Federelement zur Aufhängung von Auspuffanlagen zu schaffen, welches eine optimale Arbeitsweise sowohl im Bereich der hochfrequenten Feinschwingungen als auch im Bereich der niederfrequenten Grobschwingungen gewährleistet. Dabei sollen die Aufhängungen der Auspuffanlage so ausgebildet werden, daß die durch die schwingenden Bauteile erzeugten Geräusche weitgehend reduziert sind.

Diese Aufgabe wird erfindungsgemäß dadurch gelöst, daß zwei ineinander integrierte Federelemente vorgesehen sind, die ineinander eingreifen und durch wenigstens einen Steg miteinander verbunden sind, wobei sie schwingungsmäßig einander nachgeschaltet sind, so daß die Feinschwingungen sich nur auf das erste Federelement auswirken, welches eine weichere Federcharakteristik und eine geringere dynamische Steifigkeit aufweist und an die Auspuffanlage angeschlossen ist, wobei die beiden Federelemente oder Ringe so dimensioniert sind, daß die beispielsweise bei einer Fahrt über Schlaglöcher oder dergleichen in Form von Grobschwingungen sich ergebenden hohen Auslenkungen dadurch eliminiert werden, daß die hohen Auslenkungen über das erste weichere Federelement durchschlagen, bis dieses Federelement seinerseits in Kontakt mit dem zweiten Federelement kommt, wobei das weichere Federelement im Inneren des härteren, den Grobschwingungen zugeordneten Federelementes angeordnet ist, so daß bei hohen Auslenkungen das innere weichere Federelement in Kontakt mit dem äußeren härteren Federelement kommt, welches die Amplituden der Grobschwingungen begrenzt und die Nachschwingungen dämpft.

Mit der erfindungsgemäßen Anordnung wird also neben der Aufnahme von Fein- und Grobschwingungen und dem Abfangen von großen Auslenkungen erreicht, daß zwischen den aufgehängten Teilen und der Fahrzeugkarosserie eine Geräuschübertragung durch akustische Ankopplung über die Aufhängung weitgehend vermieden ist, weil die jeweilige Aufhängung aus wenigstens zwei schwingungsmäßig hintereinander geschalteten elastischen Aufhängungselementen besteht, welche Schallbrücken zwischen dem aufzuhängenden Teil und der Karosserie verhindern. Die Verbindung ist nämlich durch das erste weichere Federelement, welches an die Auspuffanlage angeschlossen ist, und durch das daran anschließende zweite härtere Federelement, das mit der Karosserie des Kraftfahrzeuges verbunden ist, wirksam unterbrochen.

Damit ist auch der Nachteil der bekannten Aufhängungen beseitigt, der darin besteht, daß bei einem Auftreten extremer Belastungen, beispielsweise beim Durchfahren von Schlaglöchern, die elastische Aufhängung erheblichen Schubkräften ausgesetzt ist, welche zu überdurchschnittlichen Auslenkungen und damit zu erheblichen Schwingungsgeräuschen führen, wodurch eine erhebliche störende Beeinträchtigung der Fahrzeugbenutzer sowie der Umwelt gegeben ist.

Stoßartige Beanspruchungen dieser Art können nicht nur durch Schlaglöcher, sondern auch durch andere Straßenunebenheiten, die zufällig oder gewollt vorhanden sind, herbeigeführt werden. Gewollte Stöße werden beispielsweise durch der "Verkehrsberuhigung" dienende Querwellen im Straßenoberbelag, aber auch durch Bordsteinkanten oder dergleichen erzeugt. Auch sind nicht nur die Aufhängungen von Auspuffanlagen durch diese stoßartigen Beanspruchungen betroffen, sondern auch Aufhängungen anderer Art, wie z.B. die Motoraufhängung, die Aufhängung von Nebenaggregaten, wie Lichtmaschine und/oder Benzinpumpe, so daß die erfindungsgemäße Anordnung bei Kraftfahrzeugen universell einsetzbar sein kann.

Besonders vorteilhaft kann es sein, wenn die beiden ineinander integrierten "Ringe" oberhalb der Krafteinleitung, also beispielsweise oberhalb des Anschlusses des die Auspuffanlage tragenden Elementes durch einen gemeinsamen Steg miteinander verbunden sind. Eine solche Anordnung hat nämlich den besonderen Vorteil, daß die ineinander angeordneten Ringe sich nicht aufgrund ihres Eigengewichts berühren können, da bei einer Anordnung des Steges oberhalb der eigentlichen Ringflächen der Abstand zwischen den Ringen stets erhalten bleibt.

Die beiden "Ringe" sind nicht vollständig geschlossen, da sie von dem Aufhängungselement ja auch getragen werden müssen. Diese Trägereigenschaft wird durch den oben beschriebenen Steg zwischen den beiden Ringen herbeigeführt. Als Mindestdimensionierungen sind vorgesehen, daß der innere Ring das statische Gewicht der Abgasanlage als erster Federring tragen muß, wobei die Hubänderungen der Feinschwingungen hier im 1/10 Millimeterbereich liegen. Der äußere Ring muß in der Lage sein, den extremen Hub durch außergewöhnliche oben beschriebene Stöße aufzufangen und die Nachschwingungen zu dämpfen, so daß der äußere Ring als zusätzlicher Schwingungsdämpfer wirkt.

Bei dieser Anordnung greift also ein Tragelement der Auspuffanlage in eine entsprechende Öffnung eines ersten Ringes des Aufhängeelementes ein, so daß die Schwingungen der Auspuffanlage vollständig von diesem ersten Ring aufgenommen werden können. Die auftretenden Kräfte beanspruchen aufgrund des Eigengewichtes der Auspuffanlage diesen ersten Ring (dieses erste federnde Element) auf Zug.

Bei der erfindungsgemäßen Ausführungsform sind zwei Ausnehmungen in Form von zylindrischen Öffnungen vorgesehen, die im Bereich des Innenringes angeordnet sind. Besonders vorteilhaft ist es hierbei, wenn die Trennung der Arbeitsweisen beider Ringe voneinander dadurch verbessert bzw. gesteigert wird, daß diese einerseits der Aufnahme der Tragelemente der Auspuffanlage dienen und andererseits an die Karosserie über Öffnungen mit Buchsen anschließbar sind. Damit sind die festen Aufhängungsorgane an der Karosserie bzw. der Auspuffanlage voneinander getrennt, wobei eine Relativbewegung dieser Bolzen gegenüber den erfindungsgemäßen Federelementen (den "Ringen") möglich bleibt.

Die beiden Ringe können in vertikaler Richtung hintereinandergeschaltet sein, wobei die tragenden Karosserieteile am oberen Ende der Federelemente bzw. der Ringe angreifen. Am unteren Ende sind die aufzuhängenden Teile, also beispielsweise die Auspuffanlage, angeschlossen.

Eine solche Aufhängung hat aber den Nachteil, daß sie einen relativ großen Bauraum erfordert, weswegen es besonders vorteilhaft ist, wenn die Aufhängungselemente wie beschrieben ineinander eingreifend angeordnet sind. Eine solche Anordnung hat den Vorteil, daß die Bauhöhe der gesamten Aufhängung nicht wesentlich größer als die Länge bzw. der Durchmesser des einzelnen Aufhängungselementes selbst ist. Die erfindungsgemäße Anordnung hat danach zusätzlich den erheblichen Vorteil, daß sie an allen Stellen der bisherigen Aufhängungen von Kraftfahrzeugteilen Verwendung finden kann, ohne deren Baugrößen zu ändern.

Insbesondere bei der Verwendung von Auspuffanlagen hat die erfindungsgemäße Anordnung den besonderen Vorteil, daß dann, wenn der Innenring beispielsweise aufgrund unvorhergesehenen Verschleißes oder durch zerstörende Berührungen anderer Art defekt wird und ausreißt, der äußere Ring nach wie vor erhalten bleibt und den Aufpuff auffängt, so daß die erfindungsgemäße Federanordnung als Verliersicherung dienen kann.

Die obengenannten Buchsen können gleichzeitig als Verstärkungsringe im Durchbruchsbereich herangezogen werden, so daß eine unzulässige Verformung bzw. ein Ausreißen der Buchsen weitgehend verhindert ist. Dies gilt insbesondere dann, wenn die Buchsen an diesen Stellen um- oder eingespritzt sind.

Wie an sich bekannt, können insbesondere für Sonderkonstruktionen die Wirkungen der beiden Ringe bzw. ihre getrennte Anwendung deutlich verstärkt werden, wenn der äußere Ring aus einem Gummi oder Kunststoff besteht, dessen Zusammensetzung von derjenigen des ersten Ringes abweicht und andere Federsteifigkeitswerte besitzt (die sogenannte Zweikomponententechnik).

In entsprechender Weise kann vorgegangen werden, wenn, wie oben angedeutet, drei Federringe dieser Art hintereinandergeschaltet werden. Diese können dann jeweils ebenfalls aus unterschiedlichen Kunststoffen bestehen. Damit sind feinstufige Anpassungen an die jeweiligen Anwendungsgebiete ohne weiteres möglich.

Die Erfindung wird im folgenden anhand eines Ausführungsbeispieles in der Zeichnung näher erläutert.
Fig. 1 zeigt eine Ausführungsform der erfindungsgemäßen Aufhängung in Ansicht.
Fig. 2 ist der Schnitt 11-11 nach Fig. 1.
Fig. 3 ist der Schnitt 111-111 nach Fig. 2.

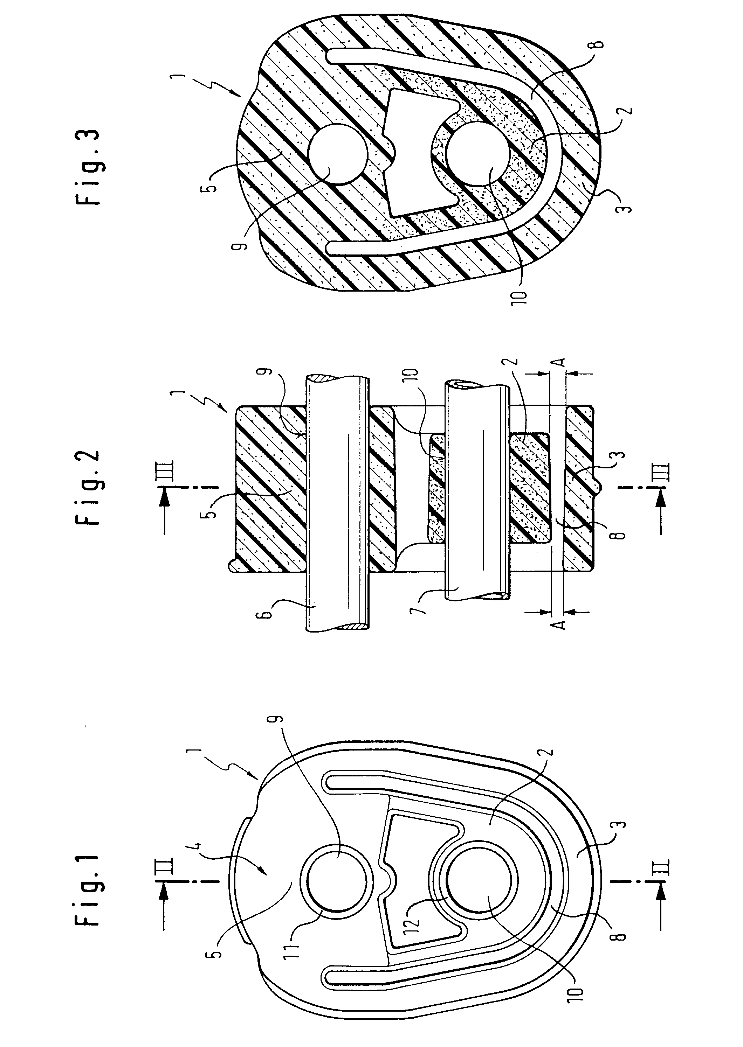

Gemäß Fig. 1 besteht das erfindungsgemäße Aufhängungselement 1 aus zwei einander ineinander eingreifenden Federelementen 2 und 3, die in ihr im Aufhängungszustand oberen Bereich hier durch einen Steg 5 miteinander verbunden sind. In diesem Bereich ist das Aufhängungselement 1 mit einem Durchbruch 6 versehen, mit welchem es bekannterweise an der Karosserie befestigbar ist.

Unterhalb des Durchbruches 6 hat das Aufhängungselement 1 einen weiteren Durchbruch 7, welcher der Aufnahme eines nicht dargestellten Bolzens dient, der mit einer Auspuffanlage des Fahrzeuges in Verbindung steht. Damit ist das Aufhängungselement so angeordnet, daß es eine Verbindung zwischen der Karosserie und der Auspuffanlage oder anderen aufzuhängenden Bauteilen herstellt.

Die beiden Federelemente 2 und 3 haben somit die Form eines im Bereich des Steges 4 aufgehängten Ringes, wobei beide Ringe ineinander eingreifen und der äußere Ring 3 aus einem harten Gummi- oder Kunststoffmaterial und der innere Ring 2 aus einem weicheren Gummi- oder Kunststoffmaterial bestehen.

Auf diese Weise treten die in der Beschreibungseinleitung ausführlich dargelegten Wirkungen des erfindungsgemäßen Aufhängungselementes ein.

Fig. 2 ist der Schnitt 11-11 nach Fig. 1 und läßt die Lage und Anordnung eines Tragbolzens 6 für die Verbindung zur Karosserie sowie eines Tragbolzens 7 zur Verbindung des Aufhängeelementes 1 mit einer Auspuffanlage erkennen. Ferner geht aus Fig.2 hervor, daß im unteren Bereich des Aufhängselementes die beiden Ringe 2 und 3 in einem Abstand A zueinander angeordnet sind, der im Regelfall aufrechterhalten wird, aber - wie oben beschrieben - bei einem Abreißen des inneren Ringes zu einem Weitertragen des äußeren Ringes führen kann, so daß dieser auch eine Verliersicherung bildet.

Fig. 3 ist der Schnitt III-III nach Fig. 2 und läßt insbesondere die Ringform der Ringe 2 und 3 erkennen, wobei die beiden ineinander eingreifenden Ringe im Ausgangszustand durch einen etwa 4/5 des Umfanges umgreifenden Trennabstand 8 voneinander so getrennt sind, daß sie sich unabhängig voneinander bewegen und verschiedenen Schwingungsarten zugeordnet sein können.

## Patentansprüche

1. Aufhängung bewegter Bauteile bei Kraftfahrzeugen, wie die Motoraufhängung oder die Radaufhängung, vorzugsweise die Aufhängung von Auspuffanlagen, wobei die einzelnen Aufhängungselemente aus Gummi oder gummiähnlichem Kunststoff hergestellte Federelemente sind, die zwischen der Karosserie des Kraftfahrzeuges und den aufzuhängenden Teilen angeordnet sind, wobei die Federelemente jeweils aus zwei ineinander eingreifenden Ringen bestehen, die miteinander über wenigstens einen Steg verbunden sind, wobei der erste an die Auspuffanlage angeschlossene Ring (das erste Federelement) die durch den normalen Fahrbetrieb verursachten hochfrequenten Feinschwingungen aufnimmt, während der zweite Ring (das zweite Federelement) an die Karosserie angeschlossen ist und durch Schlaglöcher oder dergleichen verursachten niederfrequenten Schwingungen mit großer Amplitude aufnimmt, dadurch gekennzeichnet, daß zwei ineinander integrierte Federelemente-(2,3) vorgesehen sind, die ineinander eingreifen und durch wenigstens einen Steg(4) miteinander verbunden sind, wobei sie schwingungsmäßig einander nachgeschaltet sind, so daß die Feinschwingungen sich nur auf das erste Federelement(2) auswirken, welches eine weichere Federcharakteristik und eine geringere dynamische Steifigkeit aufweist und an die Auspuffanlage angeschlossen ist, wobei die beiden Federelemente(2,3) oder Ringe so dimensioniert sind, daß die beispielsweise bei einer Fahrt über Schlaglöcher oder dergleichen in Form von Grobschwingungen sich ergebenden hohen Auslenkungen dadurch eliminiert werden, daß die hohen Auslenkungen über das erste weichere Federelement(2) durchschlagen, bis dieses Federelement(2) seinerseits in Kontakt mit dem zweiten Federelement(3) kommt, wobei das weichere Federelement(2) im Inneren des härteren, den Grobschwingungen zugeordneten Federelementes(3) angeordnet ist, so daß bei hohen Auslenkungen das innere weichere Federelement(2) in Kontakt mit dem äußeren härteren Federelement(3) kommt, welches die Amplituden der Grobschwingungen begrenzt und die Nachschwingungen dämpft.

2. Aufhängung nach Anspruch 1, dadurch gekennzeichnet, daß die beiden ineinander integrierten Federelemente (2,3) oberhalb der Krafteinleitung durch den gemeinsamen Steg (4) miteinander verbunden sind.

3. Aufhängung nach Anspruch 2, dadurch gekennzeichnet, daß die beiden Federelemente (2,3) oberhalb des Anschlusses des die Auspuffanlage tragenden Bolzens (7) miteinander verbunden sind.

4. Aufhängung nach einem der vorhergehenden Ansprüche, dadurch gekennzeichnet, daß die beiden ineinander angeordneten Ringe (Federelemente 2,3) sich in Ruhelage nicht aufgrund ihres Eigengewichtes berühren können, wobei bei einer Anordnung des Steges (4) oberhalb der Ringflächen der Abstand (A) zwischen den Ringen stets erhalten bleibt.

5. Aufhängung nach einem der vorhergehenden Ansprüche, dadurch gekennzeichnet, daß der innere Ring (2) das statische Gewicht der Abgasanlage als erster Federring trägt.

6. Aufhängung nach Anspruch 5, dadurch gekennzeichnet, daß die Hubänderungen der Feinschwingungen im 1/10 Millimeterbereich liegen, wobei der äußere Ring (3) den extremen Hub durch außergewöhnliche Stöße auffängt und Nachschwingungen dämpft und somit als zusätzlicher Schwingungsdämpfer wirkt.

7. Aufhängung nach einem der vorhergehenden Ansprüche, dadurch gekennzeichnet, daß ein Tragelement, insbesondere ein Tragbolzen (7) der Auspuffanlage in eine entsprechende Öffnung des ersten Ringes (2) des Aufhängeelementes (1) eingreift.

8. Aufhängung nach Anspruch 7, dadurch gekennzeichnet, daß aufgrund des Eigengewichtes der Auspuffanlage die auftretemden Kräfte den ersten Ring (2) beanspruchen.

9. Aufhängung nach einem der vorhergehenden Ansprüche, dadurch gekennzeichnet, daß zwei Ausnehmungen (9,10) in Form von zylindrischen Öffnungen vorgesehen sind, die im Bereich des Innenringes (2) angeordnet sind.

10. Aufhängung nach Anspruch 9, dadurch gekennzeichnet, daß die Ringe einerseits der Aufnahme der Tragelemente (7) der Auspuffanlage dienen und andererseits an die Karosserie über Zusatzbuchsen (6) anschließbar sind.

11. Aufhängung nach einem der vorhergehenden Ansprüche, dadurch gekennzeichnet, daß die beiden Ringe (2,3) vertikal hintereinander geschaltet sind.

12. Aufhängung nach Anspruch 11, dadurch gekennzeichnet, daß am oberen Ende der Federelemente oder Ringe (2,3) die tragenden Karosserieteile und am unteren Ende die aufzuhängenden Teile, wie eine Auspuffanlage, angeschlossen sind.

13. Aufhängung nach einem der vorhergehenden Ansprüche, dadurch gekennzeichnet, daß die beiden Ringe (2,3) so dimensioniert und angeordnet sind, daß bei einem Defektwerden des Innenringes (2) der äußere Ring erhalten bleibt und den Auspuff auffängt und damit als Verliersicherung dient.

14. Aufhängung nach einem der Ansprüche 9 bis 13, dadurch gekennzeichnet, daß in die Aufnahmeöffnungen (6,7) Zusatzbuchsen (11, 12) eingesetzt sind, die Verstärkungsringe im Durchbruchsbereich bilden.

15. Aufhängung nach Anspruch 14, dadurch gekennzeichnet, daß die Buchsen (11,12) an ihren Einsatzstellen im Gummi oder gummiähnlichem Kunststoff um- oder eingespritzt sind.

16. Aufhängung nach einem der vorhergehenden Ansprüche, dadurch gekennzeichnet, daß der äußere Ring (3) aus einem Gummi oder Kunststoff besteht, dessen Zusammensetzung von derjenigen des ersten Ringes (2) abweicht und andere Federsteifigkeitswerte besitzt.

17. Aufhängung nach einem der vorhergehenden Ansprüche, dadurch gekennzeichnet, daß mehrere Federelemente oder Ringe der beanspruchten Art feder- und schwingungsmäßig hintereinandergeschaltet sind.

18. Aufhängung nach Anspruch 17, dadurch gekennzeichnet, daß drei Federelemente oder Ringe hintereinandergeschaltet sind.
